# EUROPEAN PATENT SPECIFICATION

(11) **EP 0 521 178 B1**
(45) Date of publication and mention of the grant of the patent: **04.10.1995**
(21) Application number: 91110904.9
(22) Date of filing: 02.07.1991
(51) Int. Cl.: H05B 7/22, B23K 1/005

(54) **Light beam heater**
Lichtstrahlheizelement
Elément de chauffage par rayonnement lumineux

(43) Date of publication of application: 07.01.1993
(73) Proprietor: MATSUSHITA ELECTRIC INDUSTRIAL CO., LTD., Kadoma-shi, Osaka-fu, 571 (JP)
(72) Inventor: Kobayashi, Makoto, Kawanishi-shi, Hyogo-ken (JP); Ikeda, Tamotsu, Toyonaka-shi, Osaka-fu (JP); Mizuuchi, Syoichi, Nishinomiya-shi, Hyogo-ken (JP)
(74) Representative: Eisenführ, Speiser & Partner

(56) References cited:
- US-A- 3 822 097
- US-A- 4 633 872
- PATENT ABSTRACTS OF JAPAN vol. 6, no. 173 (E-129)(1051) 7 September 1982 & JP-A-57 089 283 (HITACHI SEISAKUSHO K.K.) 3 June 1982

## Description

The present invention relates to light beam heaters for use in soldering, brazing and welding small components, electronic components, and the like and in heating and joining plastics, resins, and the like.

In general, light energy emitted from a lamp, for example a xenon lamp, varies according to a value of electric current fed to the lamp. Accordingly, in light beam heaters employing such a lamp, light energy emitted from the lamp i.e., light energy applied to an object to be processed is set by properly setting the value of electric current fed to the lamp.

In conventional light beam heaters, however, even if the value of electric current fed to the lamp is substantially constant, light energy emitted from the lamp varies due to deterioration of the lamp with age, circumferential environments or variability in performance of the lamp itself.

From US-A-3,822,097 an optical system is known by which the light absorbance of a fluid within an absorbance cell is measured. In order to have definite measuring conditions, the light amount of a light radiating member is controlled by a feedback loop comprising a light detector, control means and a light source. This system is, however, not concerned with a light beam heater.

From US-A-4,633,872 a laser optical delivery apparatus is known comprising a laser tube and optical means for transmitting the output to an optical fiber. These optical means are provided with a half mirror from which a certain light amount is branched to a light detector for controlling the output power of the laser tube through a feedback circuit.

It is an object of the present invention to provide an improved light beam heater capable of performing a stable heat processing with respect to an object by making the light energy emitted from a lamp substantially constant.

According to the invention, a light beam heater is comprising a lamp; a reflector for focusing light energy emitted from said lamp on a first location; a power source for supplying an electric current to said lamp; a bundle of optical fibers for transmitting the light energy focused on said first location to a second location apart from said first location; a limited number of optical fibers branched from said bundle of optical fibers; a detector means comprising a photoelectric conversion element for providing an output upon receipt of light energy that is branched from the focused light energy by said limited number of optical fibers; and a controller for controlling the electric current flowing into said lamp by controlling said power source upon judgement of the amount of light energy based upon the output from said detector means.

This and other objects and features of the present invention will become more apparent from the following description taken in conjunction with a preferred embodiment thereof with reference to the accompanying drawing, wherein:

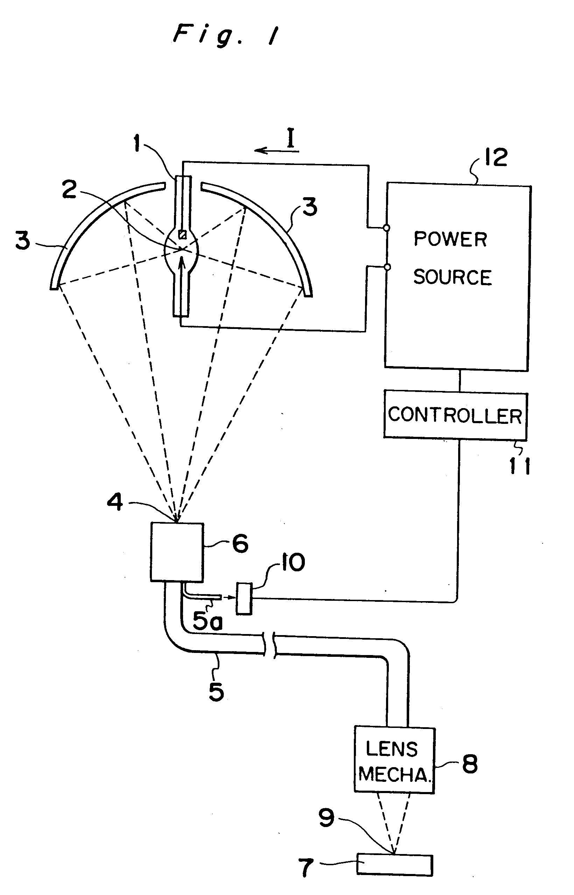

Fig. 1 is a schematic view of a light beam heater according to a preferred embodiment of the present invention.

The light beam heater includes a lamp 1 such as, for example, a xenon lamp, a reflector 3 encompassing the lamp 1, a fiber cable 5 having a first end 6 for receiving light energy from the lamp 1, and a condenser lens mechanism 8 coupled with a second end of the fiber cable 5. An ellipsoidal reflector can be preferably employed as the reflector 3. A light emitting point 2 of the lamp 1 is located on a first focal point of the reflector 3 whereas the end surface of the first end 6 of the fiber cable 5 is located on a second focal point 4 of the reflector 3. Light energy emitted from the light emitting point 2 of the lamp 1 is reflected by the reflector 3 and is focused on the second focal point 4. The fiber cable 5 accommodates a large number of, for example about 200, optical fibers each having a diameter of 0.2 mm. The light beam heater further includes a fiber cable 5a branched from the fiber cable 5 and having a first end bundled together with that of the fiber cable 5, and a solar cell 10 confronting a second end of the fiber cable 5a. The fiber cable 5a accommodates three or four optical fibers. The fiber cables 5 and 5a receive light energy focused on the second focal point 4 of the reflector 3 and transmit the light energy to the condenser lens mechanism 8 and to the solar cell 10. The light energy transmitted to the condenser lens mechanism 8 is focused on a focal point 9 in close proximity to an object 7 to be processed. The solar cell 10 generates- electricity in compliance with the intensity of the light energy received. The light beam heater also includes a controller 11 and a power source 12. The controller 11 controls the power source 12 in compliance with the magnitude of electric current generated by the solar cell 10 to control a lamp current I flowing into the lamp 1.

The light beam heater having the above-described construction operates as follows.

Supplying the lamp 1 with the lamp current I from the power source 12 causes the lamp 1 to emit light energy. The light energy is reflected by the reflector 3 and is focused on the second focal point 4 where the light energy enters the fiber cables 5 and 5a. The fiber cables 5 and 5a transmit the light energy until the light energy reaches the condenser lens mechanism 8 and the solar cell 10, respectively. The light energy received by the condenser lens mechanism 8 is focused on the focal point 9 for the subsequent heat-processing with respect to the object 7.

Part of the light energy focused on the second focal point 4 is transmitted to the solar cell 10 through the fiber cable 5a. Upon receipt of the light energy, the solar cell 10 generates electricity. The controller 11 calculates the amount of light energy applied to the object 7 on the basis of the magnitude of electric current generated by the solar cell 10. If a calculated value is less than the amount of light energy set in advance, the controller 11 controls the power source 12 to increase the lamp current I. In contrast, if the former is greater than the latter, the power source 12 is controlled to reduce the lamp current I. In this way, the light energy applied to the object 7 is controlled to be substantially constant.

According to the above-described embodiment, light energy to be used in the heat-processing can be maintained at a magnitude set in advance by directly controlling light energy required for the heat-processing. As a result, the quality of objects experiencing the heat-processing is stabilized and the reliability thereof would be enhanced.

It is to be noted here that in the above-described embodiments, although a solar cell is employed as a light-electricity conversion element, a photodiode or cadmium sulfide (CdS) may be used. In such a case, since the value of resistance varies according to the amount of light energy received, the amount of light energy can be determined based upon the value of resistance for the control of the lamp current I.

As is clear from the above, in the preferred embodiments of the present invention, the value of electric current flowing into the lamp is controlled in accordance with the amount of light energy detected. Accordingly, the amount of light energy for use in heat-processing objects can be maintained substantially constant regardless of deterioration of the lamp with age, variability in performance of the lamp itself or the like. As a result, the quality of the objects is stabilized and the reliability thereof would be enhanced.

## Claims

1. A light beam heater comprising:
a lamp (1);
a reflector (3) for focusing light energy emitted from said lamp (1) on a first location (4);
a power source (12) for supplying an electric current to said lamp (1);
a bundle of optical fibers (5) for transmitting the light energy focused on said first location (4) to a second location apart from said first location (4);
a limited number of optical fibers (5a) branched from said bundle of optical fibers (5);
a detector means (10) comprising a photoelectric conversion element for providing an output upon receipt of light energy that is branched from the focused light energy by said limited number of optical fibers (5a); and
a controller (11) for controlling the electric current flowing into said lamp (1) by controlling said power source (12) upon judgement of the amount of light energy based upon the output from said detector means (10).

## Patentansprüche

1. Lichtstrahl-Heizvorrichtung mit einer Lampe (1),
einem Reflektor (3) zum Fokussieren der von der Lampe (1) emittierten Lichtenergie auf eine erste Stelle (4),
einer Stromversorgung (12) zum Zuführen von elektrischem Strom an die Lampe (1),
einem Bündel optischer Fasern (5) zum Übertragen der auf die erste Stelle (4) fokussierten Lichtenergie an eine zweite Stelle, die von der ersten Stelle (4) getrennt angeordnet ist,
einer begrenzten Anzahl von optischen Fasern (5a), die eine Abzweigung vom Bündel optischer Fasern (5) bilden,
einem Detektor (10) mit einem fotoelektrischen Wandlerelement zur Abgabe eines Ausgangssignals nach Empfang von Lichtenergie, die über die begrenzte Anzahl von optischen Fasern (5a) von der fokussierten Lichtenergie abgezweigt wurde, und
einem Regler (11) zum Regeln des in die Lampe (1) fließenden elektrischen Stromes auf der Basis des Ausgangssignals des Detektors (10) durch das Steuern der Stromversorgung (12) entspechend der Lichtenergiemenge.

## Revendications

1. Dispositif de chauffage par faisceau lumineux, comprenant :
une lampe (1) ;
un réflecteur (3) servant à focaliser l'énergie lumineuse émise par ladite lampe (1) sur un premier emplacement (4) ;
une source d'alimentation électrique (12) servant à fournir un courant électrique à ladite lampe (1) ;
un faisceau de fibres optiques (5) servant à transmettre l'énergie lumineuse focalisée sur ledit premier emplacement (4) à un deuxième emplacement séparé dudit premier emplacement (4) ;
un nombre limité de fibres optiques (5a) se ramifiant à partir dudit faisceau de fibres optiques (5) ;
un moyen détecteur (10) comprenant un élément de conversion photo-électrique, qui sert à produire un signal de sortie dès réception de l'énergie lumineuse qui est dérivée de l'énergie lumineuse focalisée par ledit nombre limité de fibres optiques (5a) ; et
un dispositif de commande (11) servant à commander le courant électrique qui passe dans ladite lampe (1) en commandant ladite source d'alimentation électrique (12) à partir d'une décision concernant la quantité d'énergie lumineuse reposant sur le signal de sortie dudit moyen détecteur (10).
